# EUROPEAN PATENT SPECIFICATION

(11) **EP 4 402 365 B1**
(45) Date of publication and mention of the grant of the patent: **29.10.2025**
(21) Application number: 22790275.6
(22) Date of filing: 16.09.2022
(51) Int. Cl.: B66C 23/52, B66C 23/18, B63B 77/10, F03D 13/25, F03D 13/10, B63B 35/44

(54) **INSTALLATION AND/OR REMOVAL OF A WIND TURBINE COMPONENT FOR A FLOATING FOUNDATION WIND TURBINE**
INSTALLATION UND/ODER ENTFERNUNG EINER WINDTURBINENKOMPONENTE FÜR EINE SCHWIMMENDE FUNDAMENTWINDTURBINE
INSTALLATION ET/OU RETRAIT D'UN COMPOSANT D'ÉOLIENNE POUR UNE ÉOLIENNE À FONDATION FLOTTANTE

(30) Priority: 17.09.2021 NL 2029205
(43) Date of publication of application: 24.07.2024
(73) Proprietor: Itrec B.V., 3115 HH Schiedam (NL)
(72) Inventor: VAN VELUW, Cornelis Martinus, 3115 HH Schiedam (NL); DIJKSTRA, Jeroen, 3115 HH Schiedam (NL)
(74) Representative: EP&C
(86) International application number: PCT/EP2022/075818
(87) International publication number: WO 2023/041730

(56) References cited:
- WO-A1-03/100248
- WO-A1-2020/043254
- WO-A1-2020/167137
- WO-A1-2021/176071
- CN-A- 103 130 106

## Description

The present invention relates to the field of floating foundation wind turbines.

In the field of offshore wind energy generally two categories exist, namely fixed foundation wind turbines and floating foundation wind turbines. Fixed foundation wind turbines have a foundation that is secured to the seabed, e.g. a monopile or a jacket, so that water depth forms a limitation of the applicability thereof. Therefore, in particular for deeper water, floating foundations are better suited. It is projected that in the future the majority of offshore generation of electrical energy will be done by floating foundation type wind turbines.

Along with the development of foundations, at present many offshore windfarms are planned to allow for a significant electricity production. For reasons of efficiency the wind turbines have an ever increasing capacity and size. Nowadays 5 MW turbines and 8 MW are being planned. In the future even 14 MW turbines are envisaged. In known designs a 8 MW horizontal axis wind turbine has a rotor diameter of 160 metres combined with a height of the hub at about 120 metres above sea level. A proposed 14 MW turbine has a rotor diameter of 220 metres combined with the hub at about 160 metres above sea level.

In the field of floating foundation wind turbines it is at present the common understanding that assembly of the entire floating foundation wind turbine, so the combination of the floating foundation and of the entire functional wind turbine, is done remote from the actual windfarm. For example, assembly is done at a port based yard. The entire floating foundation wind turbine is then towed from the assembly location to the remote offshore windfarm location. For example, there are floating foundations comprising multiple buoyant stabilising columns, e.g. three or four of such columns. An example of a floating foundation is disclosed in WO2016205746 and has three buoyant stabilizing columns with one of the columns supporting the tower of the wind turbine. In the field, there are also mono buoyant body floating foundations. For example, a spar type foundation has a single buoyant stabilizing column on which the wind turbine tower is mounted. Other known designs have a circular or rectangular ring shaped floating body, whereon the tower of the wind turbine is erected, e.g. at the centre or at the side, typically at a corner, of the floating mono-body. Some floating foundations are of the tension-leg type. WO2020/167137 A1 is another prior art example disclosing a buoyant wind turbine structure.

In the field the need exists for maintenance of offshore wind turbines, e.g. involving the replacement of a wind turbine blade that has become damaged, of a generator, of a gearbox, or other component, etc.

For maintenance, e.g. involving removing, installing or replacing a wind turbine component, of the fixed offshore wind turbines, it is known to use a vessel mounted crane having a sufficient reach. Often, the vessel is a jack-up vessel to provide stability of the crane during the maintenance operation. It is also known to use vessel in floating condition for such operation. Typically, these vessels have a large hull, e.g. embodied as a semi-submersible crane vessel, to provide a sufficiently stable platform for the maintenance operation to be carried out. However, even with these large vessels, the relative movement between the top of the boom of the crane and the nacelle of the wind turbine is such that maintenance can only be done with calm seas and low wind speeds. Thus the operational window for performing maintenance is limited.

Performing such maintenance operations at sea for a floating wind turbine cannot involve the use of a stable jack-up vessel as water depth makes the use thereof impossible or impractical. When using the floating crane vessel for maintenance at sea of a floating wind turbine, the mentioned problems related to sea-state induced motions become even greater than with fixed foundation offshore wind turbines. These problems clearly being increase by continued increase of the dimensions of the offshore wind turbines. Therefore, it is now commonly envisaged that it is more effective to tow the entire floating offshore wind turbine back to shore for performing significant maintenance operations, like replacement of one or more blades, of the gearbox, and/or of the generator.

The invention aims to provide an improved approach for maintenance of offshore wind turbines that have a tower erected on a floating foundation.

The invention proposes a method according to claim 1 for installation and/or removal of a wind turbine component, the wind turbine having a tower that is erected on a floating foundation that is in floating condition, e.g. at the site of an offshore windfarm, wherein use is made of:
- a transferrable crane, wherein the transferrable crane comprises:
   - a revolving superstructure,
   - a boom mounted or to be mounted to the revolving superstructure,
   - a hoisting winch and associated hoisting cable departing from the boom to lift and/or lower a wind turbine component, e.g. a wind turbine blade,
wherein the method comprises - with the floating foundation in floating condition - the steps of:
- arranging the transferable crane on the floating foundation,
- using the transferable crane arranged on the floating foundation to lift and/or lower a wind turbine component, e.g. a wind turbine blade, e.g. for installing, removing, or replacing a wind turbine component of the offshore wind turbine, e.g. for performing maintenance,
- removing the transferable crane from the floating foundation.

In the method, the floating foundation comprises multiple buoyant stabilising columns, e.g. three or four buoyant stabilizing columns, e.g. with one of the stabilizing columns supporting the tower of the wind turbine, and the method comprises arranging the transferable crane on one or two of the stabilizing columns.

The method comprises arranging the superstructure of the transferable crane on one of the buoyant stabilising columns, wherein the method comprises the use of a boom support , and wherein the method comprises temporarily arranging the boom support on another one of the buoyant stabilising columns,
wherein the revolving superstructure and the boom are initially provided as separate crane parts and arranging of the transferrable crane onto the floating foundation comprises:
- arranging the revolving superstructure on one stabilizing column of the floating foundation,
- arranging the boom support on another stabilizing column of the floating foundation,
- arranging the boom on the floating foundation so that the boom support carries at least part of the weight of the boom, e.g. the boom being in transport configuration thereof,
- connecting, e.g. pivotally, the boom to the revolving superstructure to enable luffing of the boom.

The method allows for maintenance of a floating foundation wind turbine at sea, preferably at the location where the wind turbine is anchored, e.g. as part of an offshore windfarm.

Therefore, there is no need for towing or otherwise transporting the wind turbine back to a shoreline location, which is a slow process.

Furthermore, the use of the transferable crane of which the superstructure, which may also be called crane housing, is set up on the floating foundation that also supports the wind turbine tower reduces the relative movement between the crane on the one hand, e.g. sway motion of the boom, and the wind turbine tower, e.g. the nacelle on top of the tower. This facilitates, for example, fastening a wind turbine rotor blade to the hub of the wind turbine, e.g. by means of a bolted connection between the root of the blade and a mounting structure that is part of the horizontal axis rotatable hub of the wind turbine. The approach, may allow for a larger operational weather window for maintenance operations.

Preferably, the superstructure is secured to the floating foundation by means of a momentum or torque transferring device so that such loads resulting from lifting operations performed with the crane are at least in part transferred to and absorbed by the foundation. As known in the art, such loads may also be compensated for, at least in part, by a counterweight of the crane, e.g. mounted on the revolving superstructure. Whilst envisaged as an option within the scope of the invention, a drawback of a counterweight is the further increased weight of the crane. As known in the art, the counterweight may revolve along with revolving or slewing of the crane superstructure about its slew axis.

As known in the art, there is preferably a slew drive to cause control revolving of the crane about a slew axis, e.g. over a complete revolution. For example, a toothed ring gear is provided which meshes with one or more slew motor driven pinions. For example, the toothed ring gear is secured to the floating foundation, e.g. as a permanent fixture thereof or temporarily, e.g. as part of a crane support structure that is temporary arranged on the floating foundation.

The method, in embodiments thereof, also allows for an approach wherein a new wind turbine is initially construed with a tower erected on a floating foundation, e.g. at a shoreline facility, and devoid of wind turbine blades, e.g. with a nacelle mounted on the tower. The wind turbine is then transported, e.g. towed, to an offshore windfarm in this state. Then the wind turbine blades are installed, e.g. secured to the hub of a horizontal axis wind turbine, using the transferable crane that is temporarily arranged on the floating foundation when at the offshore windfarm.

The boom, or at least a main section of the boom, e.g. a telescopic main section, is preferably embodied as a lattice-type boom having main chords extending along the length of the boom at corners of the cross-section (e.g. rectangular) of the boom section and with bracing in the plane between adjacent chords. This provides for stability of the boom, e.g. compared to a closed tubular design of the sections. It is noted that the latter embodiment is also encompassed in the scope of the invention.

In embodiments, as discussed in the introduction, the boom has a length of at least 80 meters, preferably of at least 100 meters, e.g. of at least 130 meters in view of the height required for fastening a rotor blade and/or for handling a component of the wind turbine, e.g. the gearbox, generator, etc., e.g. a component housed in the nacelle.

In an embodiment, the boom of the transferable crane has a transport configuration facilitating transport of the boom, and a working configuration for lifting and/or lowering a wind turbine component, e.g. the boom in transport configuration being more compact, e.g. of reduced length, relative to the working configuration. This approach, avoids the need to transfer the crane with an extremely lengthy boom. Preferably, the step of arranging the transferable crane on the floating foundation is done with the boom in the transport configuration, wherein the boom is then brought into the working configuration for use in lifting and/or lowering the wind turbine component, and wherein the boom is returned to the transport configuration before removal of the transferable crane from the floating foundation. Another advantage is that the boom may be brought in compact transport configuration when the crane - arranged on the floating foundation - is not used, e.g. when weather is adverse.

The invention encompasses an approach wherein the crane is a mobile crane, e.g. having road engaging wheels, wherein the mobile crane is driven onto the floating foundation. This approach is practical when performed at a shoreline location, where a drive ramp can be placed for the mobile crane to be driven onto the foundation. The approach may, possibly, also be employed at sea, e.g. driving the mobile crane from a vessel via a ramp onto the floating foundation.

In preferred embodiments, use is made of a vessel that is provided with an installation crane, which installation crane is used for lifting the transferable crane when arranging the transferable crane on the floating foundation and when removing the transferable crane from the floating foundation. The installation crane does to have the lengthy boom as required for the transferrable crane, e.g. as the vessel is preferably positioned in close proximity to the floating foundation for the transfer.

For example, use is made of one or more fenders between the floating foundation and the vessel, e.g. one or more fenders being mounted to the vessel, e.g. to engage on one or two buoyant stabilizing columns of the floating foundation when present.

The positioning of the vessel relative to the floating foundation may be done in various manners, including mooring lines between them and/or the use of dynamic positioning system of the vessel (when present).

The vessel and the installation crane thereon can be relatively small sized, e.g. embodied as a supply or feeder vessel as nowadays used in the offshore.

For example, the installation crane has a capacity to handle a transferrable crane having a weight between 100 and 750 tons, e.g. in two parts as described herein.

It is noted that transferring the crane onto the floating foundation is comparatively simple compared to replacing a wind turbine component at great height, e.g. mounting a blade to the nacelle, e.g. at 100 meters or more above sea level. The operational weather window for transferring the crane onto a floating foundation, and for using that crane then for a maintenance operation, is larger than the operational weather window for performing maintenance using a vessel mounted crane with sufficient reach.

It is noted that the invention is particularly suited to floating foundations that have an above waterline portion on which the superstructure of the crane is arranged, which portion is remote from the location of the tower of the wind turbine, e.g. at least 10 or 20 meters away from the location of the tower, e.g. so that the transferable crane is not too close to the tower allowing for maneuvering of the boom and the component that is lifted by the crane without interference with the tower. It is noted that common spar-type floating foundations do not offer such an above waterline portion, or even any portion on which the transferable crane can be arranged.

The boom of the transferable crane could be rested temporarily against the tower, e.g. in view of enhanced stability of the boom, yet this is not preferred as this induces forces on the tower and may be of little importance in view of the revolving design of the crane so that stability is only enhanced over a limited range.

In embodiments, the vessel comprises a deck, e.g. aft of the bridge and crew quarters, on which the transferable crane is transported to and from the offshore wind turbine. For example, the revolving superstructure and the boom are transported to the offshore wind turbine, e.g. moored at the windfarm, as separate crane parts. The installation crane of the vessel is then used for transfer of the transferable crane between the deck and the floating foundation, e.g. in two parts.

In embodiments, the same vessel is used for transportation of the one or more components that are to be handled by the transferable crane that is also transported by the vessel. For example, one or more wind turbine rotor blades are transported by the same vessel, e.g. in a blade storage device, e.g. a rack, as the transferable crane. If desired, the blades and/or other components are transported by means of another vessel, e.g. on a barge.

In an embodiment, the blades and/or other components are transported by means of a barge or similar vessel, and the barge is configured to be connected to the floating foundation. For example, in an embodiment, a barge supporting blades to be mounted to the wind turbine is configured to be lowered onto subsurface features of the floating foundation supporting the wind turbine and the transferable crane. For example, in an embodiment, the floating foundation comprises multiple buoyant stabilising columns, e.g. three or four buoyant stabilizing columns, and the stabilising columns are connected, below the water surface, by traverse sections, each traverse section extending between two columns. In such an embodiment, the barge may be configured to be positioned over two traverse sections and for engaging these traverse sections from above. In addition or as an alternative, the traverse sections may be configured to engage the barge from below. Once the barge is positioned above the traverse sections, the barge is lowered onto the traverse sections by lowering the barge and/or by raising the floating foundation. Thus, the barge ends in a position wherein it is supported by the floating foundation. In this position the barge does not move relative to the floating foundation or relative to a crane mounted on the floating foundation, which facilitates lifting the blades from, and lowering the blades onto, the barge using a crane that is supported by the floating foundation.

It is submitted that in such an embodiment, the traverse sections are configured to support the barge supporting the blades of the wind turbine.

In embodiments, the arranging of the transferable crane on the floating foundation comprises fastening the revolving superstructure to the floating foundation, e.g. so as to transfer torque loads resulting from use of the crane to the floating structure. It is noted, that the foundation is generally of rugged design as it has to support the wind turbine tower, etc., thereon, as well as having to survive (extreme) conditions at sea. Therefore, the foundation will be able to handle loading by the crane, e.g. when provided with suitable reinforcements at the location where the crane is to be stationed thereon. The fastening device that fastens the superstructure to the floating foundation may have a variety of designs, e.g. depending on the specific design of the foundation. For example, the crane super structure is equipped with roller sets that can engage on a circular horizontal track, e.g. above and below, possibly also radially, to absorb such loads and to act as a bearing that allows for revolving or slewing of the crane. For example, the roller sets are movable between a retracted position away from the track and an operative position engaging the track, e.g. by means of (hydraulic) actuators. For example, multiple roller sets are distributed around the track. In another embodiment, a bearing is provided on the superstructure and between a support structure of the crane and the revolving superstructure, e.g. a roller bearing configured to absorb the momentum loads of the crane. For example, the support structure is placed onto the floating foundation and secured thereto, e.g. by mobile pins, clamp devices, tensionable members, e.g. tensionable chains, etc.

In an embodiment, the crane is part of a crane system, the system further comprising a crane support structure, wherein arranging the transferable crane to the floating foundation comprises:
- mounting the crane support structure on the floating foundation,
- mounting the revolving superstructure on the crane support structure already mounted to the floating foundation. For example, the support structure is placed onto the floating foundation and secured thereto, e.g. by mobile pins, mobile hooks, clamp devices, tensionable members, e.g. tensionable chains, etc.

In embodiments, the boom support is part of the crane support structure, e.g. allowing the handling thereof by means of the installation crane of the vessel in one action.

In embodiments, the method further comprises temporarily arranging a wind turbine blade support structure on the floating foundation, e.g. embodied as a rack configured to hold one or more blades in horizontal orientation. These one or more wind turbine blades are to be installed or removed and are placed in or on the wind turbine blade support structure. For example, the transferable crane when arranged on the floating foundation is used to arrange and remove the wind turbine blade support structure on and from the floating foundation, e.g. to transfer the wind turbine blade support structure between a vessel and the floating foundation.

In embodiments, the method further comprises ballasting the floating foundation to, at least partially, compensate for the weight of the transferable crane that is being arranged on the floating foundation. As indicated, the crane may have a significant weight that may impair the position of the foundation when not countered by suitably ballasting the foundation. It is noted that known floating foundation are already equipped with ballast tanks and pumps so as to control the orientation and depth of the foundation. In embodiments, this system is used for compensating for the arranging of the transferable crane. In another embodiment, an additional (water) ballast system is provided, e.g. temporarily, on or in the floating foundation, e.g. dedicated in configuration (capacity, speed) to the arrangement of the transferable crane on the foundation.

In embodiments, the method involves temporarily providing additional buoyancy to, at least in part, compensate for the weight of the transferable crane when arranged on the foundation. For example, one or more buoyancy members are attached temporarily to the foundation, e.g. to a stabilizing column thereon on which the crane superstructure is mounted. In an embodiment, an additional buoyancy member is part of the transferable crane and is transferred along with the crane to the foundation so as to be submerged to provide extra buoyancy.

In embodiments, the transferable crane is used for installation and/or removal of a wind turbine rotor blade on or from the wind turbine, wherein the crane is used to lift a wind turbine blade to the height of a hub of the wind turbine and to support the blade while fastening the blade to the hub. As known in the art, the blade may be held substantially horizontal for a so-called three o'clock or nine o'clock installation. In another embodiment, the blade is held generally vertical for a six o'clock installation. As is known in the art, the blade may be held by a so-called blade lifting tool that is suspended from the hoisting cable of the transferable crane.

In an embodiment, the transferable crane is operated to lift a wind turbine rotor blade whilst remaining in horizontal orientation to a height that is substantially level with a blade mounting structure of the offshore wind turbine, e.g. on a horizontal axis hub,
wherein use is made of a blade motion synchronization and positioning device, which device comprises:
- a wind turbine coupler, that is configured to releasably couple the device to the wind turbine,
- a blade coupler, e.g. a blade root coupler that is configured to couple to the exterior of the blade root,
- a motion arm between the wind turbine coupler and the blade coupler,
- a controllable motion arm actuator assembly comprising one or more actuators associated with the motion arm and a controller, the assembly being configured to provided controlled motion of the motion arm.

Embodiments of this approach, and of the blade motion synchronization and positioning device and other equipment used therein, are described in the application NL2028730 of the present applicant. Due to the use of such a device, which is preferably mounted to the top of the tower using the transferable crane, the installation of a blade can be greatly facilitated and/or requirements on the crane (e.g. in view of stability) may be reduced, e.g. allowing for a reduced weight of the boom. For example, the motion arm is an articulated motion arm having multiple interconnected arm segments including an inner arm segment that is connected to the tower coupler and an outer arm segment that carries the blade coupler, possible also one or more intermediate arm segments, wherein the arm segments are connected to one another via a z-axis hinge, e.g. solely providing for motion in two non-parallel horizontal directions.

In embodiments, the boom is composed of multiple sections, e.g. two or more sections being telescopic and/or foldable relative to one another. For example, a telescopic main boom section is or is to be pivotally mounted to the superstructure and a jib section is foldable relative to the main boom section, e.g. between a folded position along the main boom section and an extended position.

In embodiments, the method comprises - after arranging the boom in compact transport configuration thereof on the floating foundation, e.g. after attaching the boom to the superstructure - bringing the boom in the working configuration involving extending any one or more telescopic sections and/or unfolding any one or more foldable sections. This approach, i.e. transferring the boom onto the floating foundation in the compact transport configuration, avoids handling of the lengthy boom during transfer, e.g. by means of the installation crane of the vessel, e.g. thereby reducing the specification for the installation crane.

In embodiments, the boom is a telescopic and folding boom, the boom comprising:
- a main boom section, the main boom section comprising:
   - a main boom structure that is pivotally connected, or connectable, to the revolving superstructure, and
   - an extensible boom structure, slidably mounted to the main boom structure, so as to be movable between a retracted position and an extended position in the direction of the length of the main boom section,
- a jib section that is mounted pivotally about a pivot axis to the extensible boom section, the jib section comprising:
   - a jib member that is pivotally mounted to the extensible boom structure, so as to be movable between a folded position, in which the jib member is alongside the main boom section, and an extended position, e.g. in the direction of the length of the main boom section.

In an embodiment, the transferable crane comprises a telescopic boom. The telescopic boom has a main boom section, comprising two telescopically connected boom structures and a jib section, comprising multiple jib members. The jib section is mounted to one of the boom structures of the main boom section. Preferably, the telescopic boom is transferred from the supply vessel onto the floating foundation while in a transport configuration, i.e. with the main boom section in a retracted position and with the jib section folded along the main boom section.

In an embodiment, the boom is arranged on the floating foundation in a substantially horizontal orientation.

In an embodiment, only after the boom is arranged on the floating foundation, i.e. is transferred with the revolving superstructure onto the floating foundation or is transferred separate from the revolving superstructure onto the floating foundation and is connected to the revolving superstructure mounted on the floating foundation, is the boom is brought from the transport configuration into the working configuration.

In an practical approach, the boom is brought from the transport configuration into the working configuration by first raising the main boom section, e.g. by a luffing mechanism of the main boom section, with the jib member being in a folded position, into a transformation position thereof, e.g. into a substantially vertical orientation. Thus, the boom is raised into a substantially vertical position, the transformation position, while in the transport configuration. In the transformation position, preferably, the main boom section is rested against a boom stop that is preferably provided on the revolving superstructure. The raising of the main boom section is followed, with the main boom section remaining in the transformation position thereof, by unfolding of the jib section and the subsequent extension of the telescopic main boom section. Due to this approach, i.e. raising the telescopic boom into the transformation position while still in the transport configuration, a small "footprint" is required for this activity, e.g. compared to raising the boom whilst already completely deployed into working configuration.

For example, the luffing mechanism comprises a luffing winch and associated luffing cable extending between the superstructure, e.g. a gantry thereof, and the boom, e.g. the main boom section thereof.

In practical embodiments, the boom, e.g. when in the working configuration thereof, has a length of at least 80 meters, preferably of at least 100 meters, e.g. of at least 130 meters.

As discussed above, the floating foundation comprises multiple buoyant stabilising columns, e.g. three or four buoyant stabilizing columns, e.g. with one of the stabilizing columns supporting the tower of the wind turbine (or with the tower in the centre of the stabilizing columns as is also known in the art). Herein, the method comprises arranging the transferable crane on one or two of the stabilizing columns.

The columns of the floating foundation may be provided with below water entrapment plates protruding from the column as is known in the art. The vessel provided with the installation crane as used herein may have a draft that is significantly less than the depth of these plates, so that even when positioned in close proximity to the columns, the vessel will not collide with these plates.

In embodiments, the crane is provided with a load connector active position control system that is configured and operated to actively control the position of the load connector from which the component is suspended during lift and/or lowering in at least one horizontal direction, preferably two non-parallel horizontal directions, relative to the boom. This approach is, for example, discussed in NL2028730 of the present applicant.

The boom of the crane is provided with a tagline system for control of the component during lifting and/or lowering. The provision and use of a tagline system, e.g. for control during handling of a wind turbine blade is known in the art.

In embodiments, the method comprises temporarily arranging a working deck accessible for personnel on at least one of the stabilising columns of the floating foundation, e.g. the working deck bridging the stabilizing column on which the superstructure of the crane is arranged and the stabilizing column on which the boom support is arranged. For example, the boom support is integrated with the working deck to facilitate handling thereof. For example, the working deck is accessible via a motion compensated gangway device present on a vessel, e.g. the vessel equipped with the installation crane as discussed herein.

In an embodiment, the wind turbine is a new wind turbine that has been initially construed with a tower erected on a floating foundation, e.g. at a shoreline facility, and devoid of wind turbine blades, e.g. with a nacelle mounted on the tower, and that has been towed to an offshore windfarm in said state, wherein the wind turbine blades are installed using the transferable crane that is arranged on the floating foundation when at the offshore windfarm.

In an embodiment, the revolving superstructure is provided with a slew bearing that is supported by a crane support structure that is mounted to the revolving superstructure or that is present on or to be temporarily mounted on the floating foundation. In the first case, the crane support structure is mounted to the revolving structure via the slew bearing. In this embodiment, the crane, the slew bearing and the crane support structure can be lifted form the vessel and arranged on the floating foundation as a single unit. In the latter case, the slew bearing and the crane support structure can be handled as a single unit, separate from the crane. The combined slew bearing and crane support structure can be arranged on the floating foundation prior to the transferable crane being arranged on the floating foundation.

The invention also relates to a crane system according to claim 15 configured for use in a method as discussed herein.

The invention will now be described with reference to the drawings. In the drawings:
Fig. 1 shows a perspective view of an exemplary embodiment of a crane according to the invention mounted on the floating foundation of an offshore wind turbine;
Fig. 2 shows a perspective view of the vessel of Fig. 1 mounting a revolving superstructure of the crane of Fig. 1 on a floating foundation;
Fig. 3 shows a perspective view of the vessel of Fig. 1 after mounting a boom of the crane of

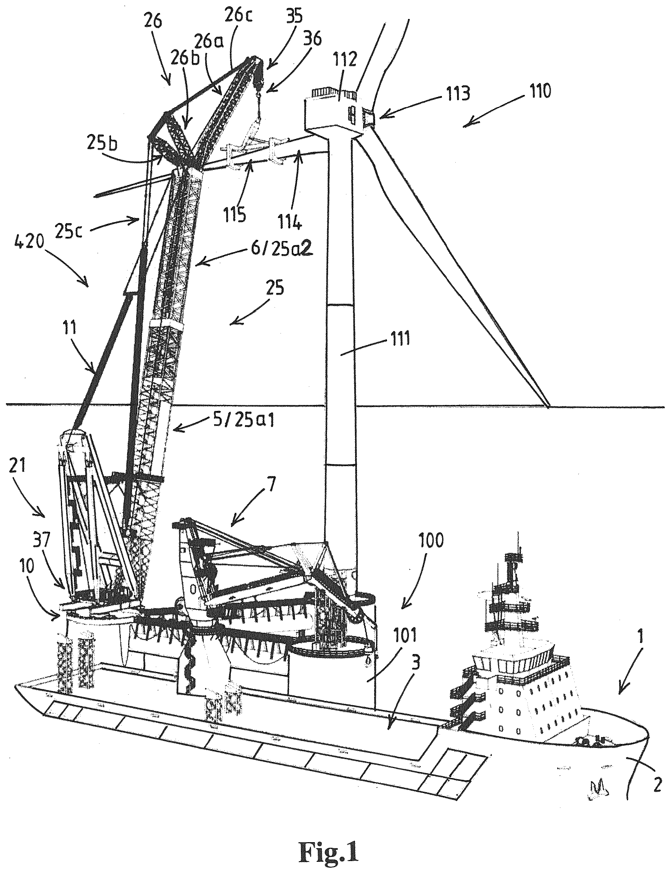

Fig. 1 on a floating foundation, the boom being in a transport configuration;

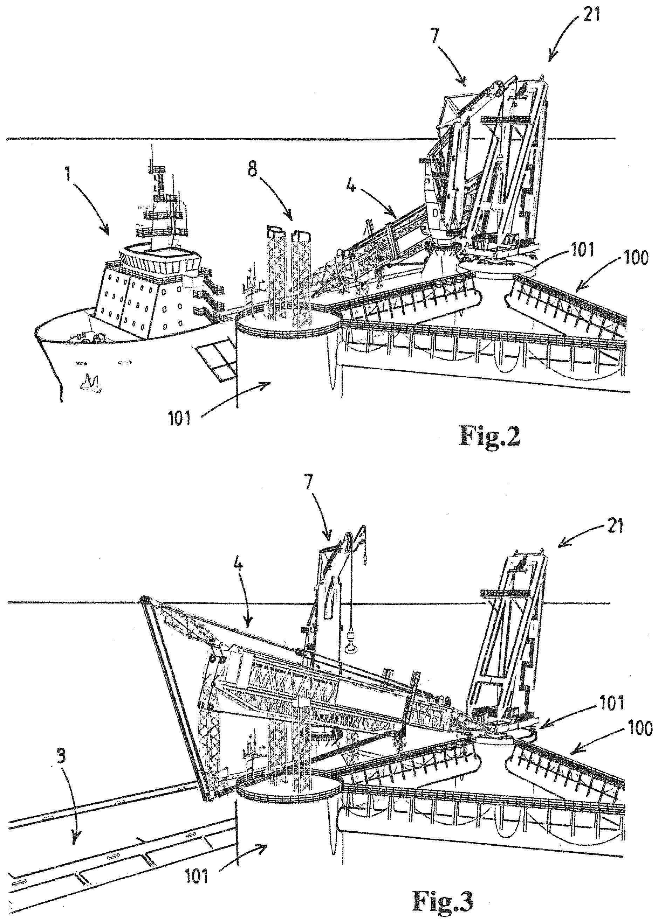

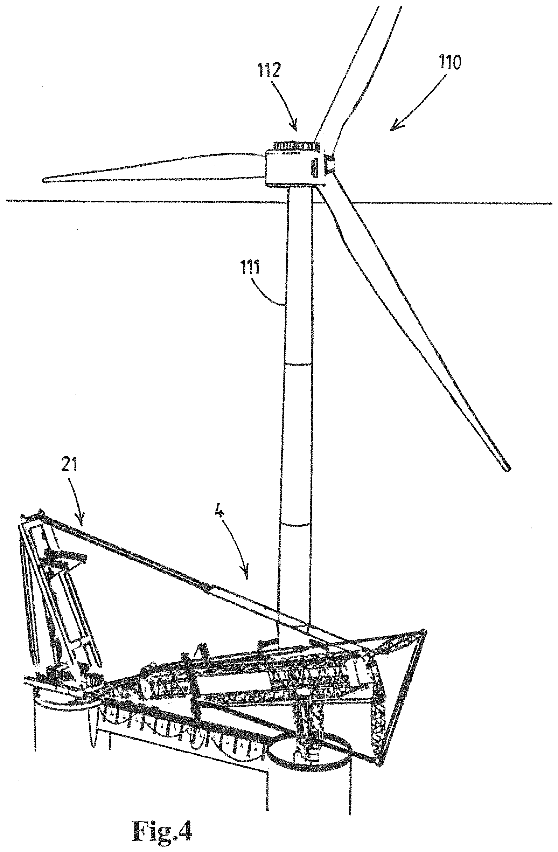

Fig. 4 shows a perspective view of the boom of Fig. 3 connected to the revolving superstructure of Fig. 2;

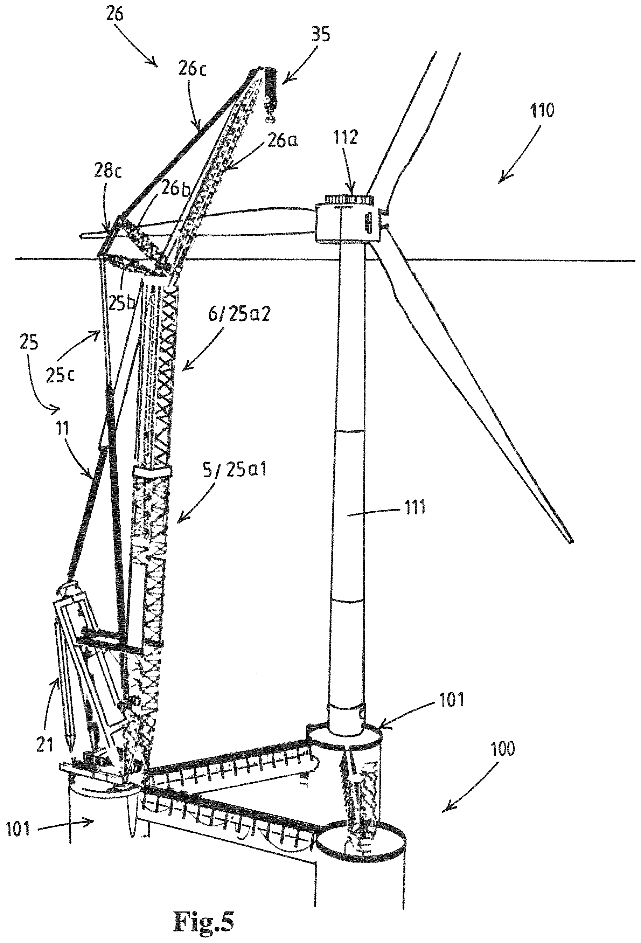

Fig. 5 shows a perspective view of the crane of Fig. 4 with the boom in a working configuration;

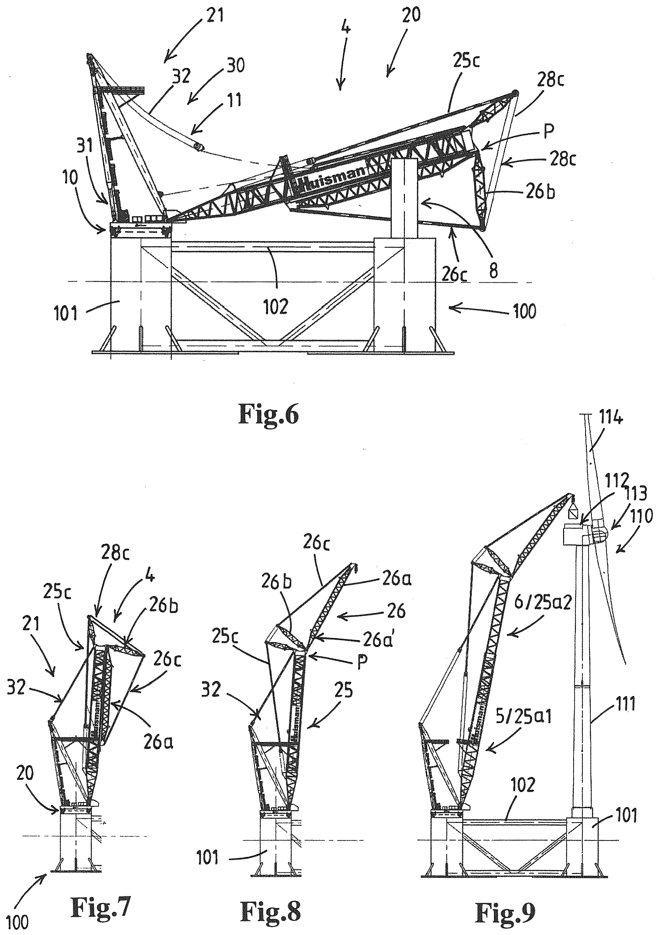

Fig. 6-9 shows side views of subsequent steps of bringing a boom from the transport configuration into the working configuration; and

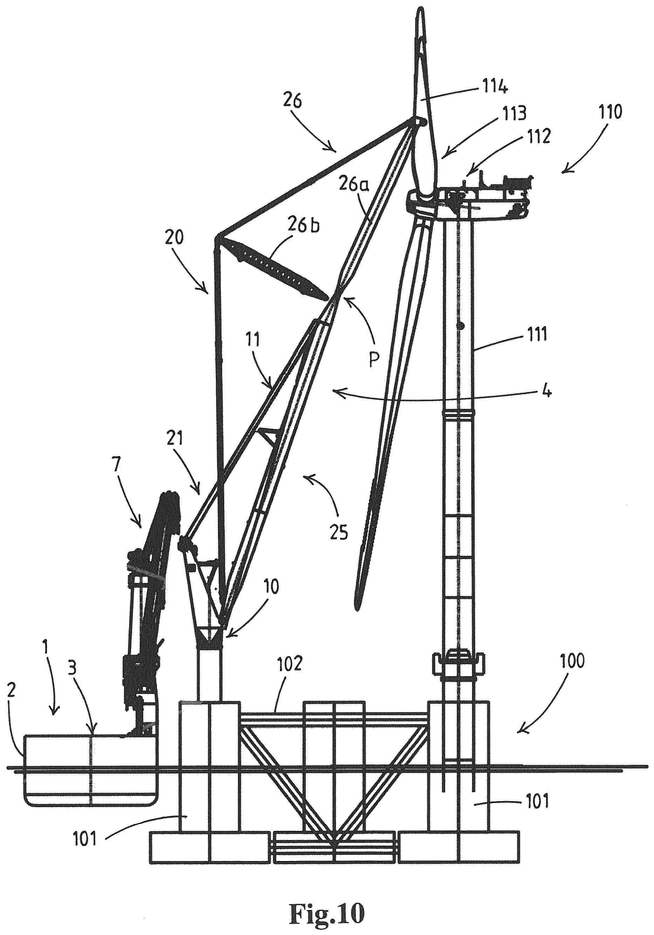

Fig. 10 shows a side view of another exemplary embodiment of a crane, similar to the crane of Fig. 1, according to the invention mounted on the floating foundation of an offshore wind turbine.

The figures illustrate a method that can be employed in the course of maintenance of an offshore wind turbine, the wind turbine having a tower that is erected on a floating foundation that is in floating condition and subject to sea-state induced motions, e.g. at the site of an offshore windfarm. Figures 1 - 5 show steps of the method.

The figures 1-5 show an exemplary embodiment of a transferable crane 20 according to the invention. The crane 20 is being arranged on a floating foundation 100 of an offshore wind turbine 110 to enable maintenance of the wind turbine.

Figure 1 depicts the crane 20 supporting a blade 111, held in a blade lifting device 115, adjacent to the hub of the wind turbine 110.

In the exemplary embodiment shown, the floating foundation 100 has three buoyant stabilising columns 101, which stabilising columns are connected by beams 102.

The offshore wind turbine 110 comprises a tower 111 erected on a stabilising column 101. The tower supports thereon a nacelle 112 having a horizontal axis hub 113 to which the blades 114 are mounted.

The crane 20 is a transferable crane, i.e. is configured to be temporarily mounted on the floating foundation of a wind turbine.

The crane 20 comprises a revolving superstructure 21 that can revolve about a vertical or slew axis, e.g. by a slew drive, and a boom 4.

In the exemplary embodiment shown, the boom 4 comprises a main boom section 25, a jib section 26.

Furthermore, in the exemplary embodiment shown, the boom 4 is a telescopic and folding boom, that has a transport configuration for facilitating transport of the boom, see for example figure 3 and figure 4, and a working configuration for lifting and/or lowering a wind turbine component, see for example figure 5.

The main boom section 25 is telescopic, comprising a main boom structure 5 and an extensible boom structure 6 that is telescopically received in the main boom structure. The extensible boom structure 6 is slidably mounted to the main boom structure 5, so as to be movable between a retracted position, see for example figure 3 and figure 4, and an extended position in the direction of the length of the main boom section 25, see for example figure 5.

The jib section 26 comprises a jib member 26a. The jib member 26a is pivotable mounted to the extensible boom structure 6, so as to be movable between a folded position in which it is adjacent the main boom section 25, see for example figure 3 and figure 4, and an extended position in the direction of the length of the main boom section 25, see for example figure 5.

In the method shown, use is made of a vessel 1, the vessel comprising a floating hull 2.

The vessel 1 is used to transport, at least, the transferable crane 20 to and from the offshore wind turbine. The vessel comprises a deck 3 for during transport storing the transferable crane 20, in the embodiment shown for storing the transferable crane 20 with the boom 4 separated from the revolving structure 21.

The vessel 1 is furthermore provided with an installation crane 7 for lifting the transferable crane 20, in the embodiment shown for lifting the revolving superstructure 21 and the boom 4 sequentially, from the storage deck 3 onto a floating foundation 100, and for lifting the transferable crane from the floating foundation.

An example of the method according to the invention comprises - with the hull 2 of the vessel 1 in floating condition and the floating foundation 100 in floating condition - the steps of:
- arranging the transferable crane 20 onto the floating foundation 100, see figures 2 and figure 3,
- performing maintenance, e.g. by removing, installing or replacing a wind turbine component 114 using the transferable crane 20, depicted in figure 1, and when maintenance is completed and the crane no longer needed
- removing the crane 20 from the floating foundation.

The method allows for maintenance of floating foundations mounted wind turbines at sea, in particular at the location where the wind turbines are anchored.

Setting up the transferable crane 20 on the floating foundation 100 supporting the wind turbine, reduces the relative motion between the crane and the wind turbine, in particular reduces the relative movement between the top of the crane and the top of the wind turbine. This is in particular relevant when handling components for in the nacelle and blades of the wind turbine, which have to be positioned accurately at a great height. Furthermore, the method and crane according to the invention enable the use of relatively small sized vessels, e.g. a feeder vessel, for transporting and utilizing the transferable crane.

In the embodiment shown, the boom the boom 4 is a telescopic and folding boom, having a transport configuration in which the boom is retracted and folded, depicted in figure 3 and figure 4, and a working configuration in which the boom is extended and unfolded, see figure 1 and figure 5. Therefore, the method furthermore comprises, prior to performing maintenance, bringing the boom 4 of the transferable crane into the working configuration, and, after performing the maintenance, bringing the boom 4 of the transferable crane 20 back into the transport configuration.

Figures 6 - 9 show the boom of the transferable crane 20 in different positions during the process of transforming the boom 4 of the crane from the transport configuration into the working configuration. The boom 4 is a telescopic boom having a main boom section 25 that comprises two telescopically connected boom structures 5,6, and a jib section 26 that comprises a jib member 26a that is mounted to one of the telescopic structures 6. In figure 6, the boom 4 is connected to the revolving superstructure 21. The boom 4 still rests on a boom support 8, and has a substantially horizontal orientation. Also, the wires 11 for luffing the boom 4 are still unloaded.

In the embodiment shown, the transferable crane 20 is provided with a boom stop 9, mounted on the revolving superstructure 21, for engaging the main boom structure when the boom 4 is raised in a transformation position for subsequent unfolding and extending the boom, i.e. for moving the boom from the transport configuration, shown in figure 6, into the working configuration, shown in figure 9.

In figure 7 the luffing wires 11 are tensioned and the boom 4, still in the transport configuration, is raised upwards. The luffing wires subsequently pull the boom against a boom stop 9. The boom stop 9 is configured for engaging the boom 4, in the particular embodiment shown the main boom structure 5, when the boom 4 is raised in the transformation position for unfolding and extending the boom. Figure 7 shows the boom 4 in the transformation position. In the preferred embodiment shown, the boom stop is provided with a securing device to secure the boom in said configuration position.

The boom is subsequently unfolded, see figure 8, and extended, see figure 9. Once the boom 4 is thus brought into the working configuration, the boom is lowered out of the transformation position, i.e. away from the boom stop, and is used for lifting wind turbine components, see figure 9.

Providing the boom of the crane with a transport configuration, in which the boom has a reduced footprint, allows for arranging the crane, in particular the boom of the crane, onto a floating foundation having only limited top surface above waterline available remote from the tower of the wind turbine. Furthermore, providing the boom with a compact transport configuration allows for arranging the crane, in particular the boom of the crane, onto the floating foundation of an offshore wind turbine with a small installation crane.

Furthermore, in the embodiment shown, the boom, once connected to the superstructure, can be pivoted while in transport configuration. Therefore the boom can be raised prior to the boom being moved from the transport configuration into the working configuration, and thus, the crane maintains a small footprint during the unfolding and extending of the boom, and when the boom is in the working configuration. This small footprint, compared to an unfolded and extended boom extending in the horizontal direction, is beneficial for maintaining the combined crane and floating foundation in a stable condition.

In an alternative embodiment, the boom is a telescopic boom or a folding boom, and moving the boom from the transport configuration into the working configuration only involves telescopic movement or folding movement of the boom. in yet another embodiment, the crane may be a self-erecting crane.

Furthermore, in the particular embodiment shown, the boom and the revolving structure are transported as separated components, i.e. the boom is not connected to the revolving structure during transport. Furthermore, the boom and the revolving superstructure are separately transferred onto the floating foundation, and only once mounted on the floating foundation is the boom connected to the revolving superstructure. Therefore, the method shown comprises the steps:
- lifting the revolving super structure onto the floating foundation, and securing the revolving superstructure to the floating foundation, shown in figure 2,
- lifting the boom onto the floating foundation, and securing the boom to the revolving superstructure to provide a working crane, e.g. pivotable securing the boom to the revolving superstructure to enable raising and lowering of the boom, shown in figure 3.

Transporting and transferring the boom and revolving superstructure as separate components allows for the use of a small vessel, and a small installation crane for transferring the crane form the vessel onto the floating foundation.

Preferably, the method further comprises the step of fastening the transferable crane 20 to the floating foundation 100 so as to transfer torque loads from the crane to the floating foundation during use of the crane for maintenance of the wind turbine.

In the exemplary embodiment shown, the transferable crane 20 is part of a crane system. The crane system in addition to the transferable crane 20 further comprises a boom support 8. The boom support 8 shown is configured to be temporarily mounted on the floating foundation for supporting at least part of the boom when in the transport configuration.

The method for mounting this crane on a floating foundation comprises:
- mounting, and preferably fastening, the boom support 8 to the floating foundation 100,
- mounting the boom 4 on the boom support 8, so that the boom support carries at least part of the weight of the boom 4, and
- attaching the boom 4 to the revolving superstructure 21.

In yet a further embodiment, the crane is part of a crane system that comprises a crane support structure. The crane support structure is configured to be coupled to the floating foundation, preferably to one or two stabilising columns of the floating foundation, and is configured for the crane to be mounted thereto. The crane support structure thus forms an interface between the floating foundation and the transferable crane mounted on the floating foundation, which may facilitate providing a solid connection between the two.

The method for mounting this crane on to the floating foundation comprises:
- arranging the crane support structure on the floating foundation, e.g. on one or two of the stabilizing columns and/or one or more of the beams of the floating foundation,
- mounting the revolving superstructure on the crane support structure.

For example, in an embodiment the crane support structure is a frame that is configured to engage the top of two stabilisation columns at a bottom side of the frame, and to be engaged by the transferable crane at a top side of the frame. For example, the crane structure may thus support the transferable crane between the two stabilisation columns, above the beams connecting the stabilisation columns. Alternatively, the crane supports structure may be configured to be mounted on the beams instead of on the stabilisation columns. Also, in an embodiment, the crane supports structure may be connected to the crane, for example to the revolving superstructure of the crane, such that the transferable crane and support structure can be mounted on the floating foundation in a single step.

Also, in an embodiment, the boom support is part of the crane support structure. Thus, the crane support may form an interface between the boom support and the floating foundation, which may facilitate providing a solid connection between the two. Furthermore, the crane support structure and the boom support can be mounted on the floating foundation in a single step.

In an embodiment, the crane support structure comprises a deck for storage of wind turbine components, e.g. nacelle components, for the maintenance of the wind turbine. Thus, the wind turbine components can be transferred from a vessel onto the crane supports structure, and thus on the floating foundation, by an installation crane or the crane of a supply vessel. The transferable crane can lift wind turbine components from, and lower the wind turbine components onto, the platform of the crane support structure, instead of from or onto the deck of a vessel. This is beneficial because the transferable crane therefore does not have to compensate for the relative motion of the vessel and the floating foundation.

In an embodiment, the method comprises mounting a blade support structure, e.g. a blade transport crate, on the floating foundation, or optional on a crane support structure, if present. Thus, the blade can be mounted on the floating foundation by a supply vessel, or by the vessel that also mounted the transferable crane onto the floating foundation. With the blade and the transferable crane both mounted on the floating foundation, they both move in unison with the floating foundation. The transferable crane can lift wind turbine components from, and lower the blade into the storage crate without having to compensate for relative motion of the blade relative to the crane, as would be the case when the blade had to be lifted from a vessel.

The blade support structure is configured to hold a blade, to be lifted with a blade from a vessel, and to be mounted on a floating structure or optionally on a crane support structure. The blade support structure is configured for holding a wind turbine blade such that it can be coupled to the hoisting system of the crane.

In an embodiment, the method comprises moving ballast, e.g. pumping ballast water between ballast tanks, between the stabilizing columns, and/or between the environment, e.g. pumping sea water, and the stabilizing columns, while moving the revolving super structure and/or the boom onto the floating foundation. Thus, the ballast system of the floating foundation can be used for keeping the floating foundation level while arranging the crane on the floating foundation. In addition or as an alternative to using the ballasts system of the floating foundation, ballast, for example in the form of ballast tanks to be filled with water, and/or floating bodies can be connected with the floating foundation to balance the floating foundation with the crane, to keep the whole substantially level, in particular while the transferable crane is mounted on the floating foundation and while the crane is lifting wind turbine components.

In an embodiment of the method, performing maintenance comprises lifting a blade with the crane and supporting the blade in a mounting position adjacent the nacelle for the wind turbine mounted on the floating foundation.

Figures 1-5 show a transferable crane 20 for maintenance of an offshore wind turbine 110, the wind turbine 110 having a tower 111 that is erected on a floating foundation 100 that is in floating condition and subject to sea-state induced motions, e.g. at the site of an offshore windfarm. The transferable crane 20 comprises:
- a revolving superstructure 21, preferably comprising a ring bearing 10;
- a boom 4 in the form of a telescopic folding boom, wherein the telescopic folding boom comprises:
   - a main boom section 25, the main boom section comprising:
      - a main boom structure 25a1, pivotable connected or to be pivotable connected to the revolving superstructure 21,
      - an extensible boom structure 25a2, slidably mounted to the main boom structure 25a1, so as to be movable between a retracted position and an extended position in the direction of the length of the main boom section 25,
      - a jib section 26, mounted pivotably about a pivot axis P to the extensible boom section, the jib section 26 comprising:
         - a jib member 26a, pivotable mounted to the extensible boom structure, so as to be movable between a folded position, in which it is adjacent the main boom section 25, and an extended position in the direction of the length of the main boom section 25,
         - a jib strut 26b,
         - a jib stay 26c,
         - a variable length stay mechanism 28,
         - a luffing assembly 30,
         - a hoisting system 34 comprising a main winch and an associated main hoisting cable, wherein the main hoisting cable extends from the main winch to a main cable sheave assembly on the jib member.

The boom 4 has a transport configuration, in which the extensible boom structure 25a2 is in the retracted position and the jib member 26a is in the folded position, for facilitating transport of the boom 4, and a working configuration, in which the extensible boom structure 36a2 and the jib member 26a are each in the extended position, for lifting and/or lowering a wind turbine component, e.g. a wind turbine blade 114.

In the embodiment shown, the boom 4 is provided with a jib section that enables folding the boom 4.

The crane 20 is mounted upon said ring bearing 10. The crane 20 comprises a revolving superstructure 21 mounted upon said ring bearing 10. The superstructure 21 has an elongated A-shaped frame, also referred to as "gantry". The height of the superstructure is for example about 25 meters, for a lattice boom of about 100-120 meters.

The crane 20 comprises a lattice boom pivotally mounted to the revolving superstructure 21, here in particular to a foot portion of revolving superstructure. The lattice boom comprises a main boom section 25 and a jib section 26 mounted pivotably about a pivot axis P to the main boom section.

The boom 4 of the crane comprises a lattice type main boom section 25 and a jib section 26. The jib section comprises a jib member 26a, or jib. The jib 26a is sometimes referred to as a fly-jib, and is generally provided to obtain an increased length of the lattice boom of a crane.

The main boom section 25 comprises a latticed boom member 25a, the lower end 25a' of which is pivotally mounted about a pivot axis 22 to the superstructure 21, here to a foot portion of the superstructure 21. The boom section 25 further comprises a main boom strut 25b, one end 25b' of which is mounted to an upper end 25a" of the boom and extends essentially perpendicular to the boom member. The boom section 25 further comprises a boom stay 25c extending between the main boom strut 25b, in the shown embodiment from the opposed end 25b" of the main boom strut, and a lower portion of the boom member 25. Here, the boom stay is a variable length boom stay, compare figure 7 with figure 8.

The jib section 26 is mounted pivotably about a pivot axis P to the extensible boom structure 25a2. The latticed boom member 25a comprises a front face 25e, opposite the side of the main boom strut 25b and the boom stay 25c. The pivot axis P advantageously extends forward of this front face 25e, allowing the jib section to be fully folded against the main boom structure 25a1.

The jib section 26 comprises a latticed jib member 26a, an inner end 26a' of which is pivotably mounted about pivot axis P to the upper end 25a" of the latticed boom member. The jib section 26 further comprises a jib strut 26b, an end 26a' of which is mounted to the inner end 26a' of the jib member and extends essentially perpendicular to the jib member 26a. The jib section 26 further comprises a jib stay 26c extending between the jib strut 26b, in the shown embodiment from the opposed end 26b" of the jib strut 26b, and the jib member 26a.

A variable length stay mechanism 28 is provided between the jib section 26 and the main boom section 25, in particular between the main boom strut 25b and the jib strut 26b. In the shown embodiment, the variable length stay mechanism 28 is provided between an end 25b" of the main boom strut 25b and end 26b" of the jib strut 26b, compare figure 7 with figure 8.

The crane 20 further comprises a luffing assembly with a luffing winch 31 mounted to the superstructure and a luffing cable 32 extending between the superstructure 21 and the main boom 25. The luffing assembly is provided to position the main boom section of the crane in an appropriate hoisting position. There is a correlation between the maximum load that can be hoisted and the position of the main boom section. Generally, the closer the boom member is to the vertical, the larger the load that it can hoist.

The crane 20 further comprises a hoist winch 37, a hoist cable 35 and an object suspension device 36. In the shown embodiment, the hoist winch 37 is also mounted to the superstructure 21. The hoist cable 35 extends from the hoist winch 37 along the main boom section 25 and the jib section 26 to the object suspension device 36.

In the embodiment shown, the ring bearing 10 of the crane is an integral component of the revolving structure. Thus, the revolving structure 21 is mounted with the bearing ring 10 onto the floating foundation. In an alternative embodiment, the ring bearing is a partial bearing, configured to cooperate with a bearing part mounted on a floating foundation.

In the embodiment shown, the boom 4 is separated from the revolving structure 21 by removing the boom pivot axle that pivotable connects the boom to the revolving superstructure 21.

In an alternative embodiment, the main boom section comprises a base part, which base part is with a boom pivot axis pivotable connected to the revolving structure and is detachable connected to the rest of the main boom section, so as to enable the boom to be disconnected from the revolving superstructure by disconnecting the base part of the main boom section, and such that the boom pivot axis stays connected with the revolving superstructure when the boom is separated from the revolving super structure.

In yet another alternative embodiment, the boom can be separated from the revolving superstructure by separating part of the revolving super structure, such that the boom pivot axis stays connected with the boom when the boom is separated from the revolving super structure.

In an embodiment, the transferable crane comprises a boom receiving system, for, when the boom is disconnected from the revolving superstructure, receiving a lower end of the main boom structure and preferably for positioning the lower end of the main boom structure relative to the revolving superstructure to enable connecting the boom to the revolving structure.

## Claims

1. Method for installation and/or removal of a wind turbine component, the wind turbine (110) having a tower (111) that is erected on a floating foundation (100) that is in floating condition, e.g. at the site of an offshore windfarm, wherein use is made of:
- a transferrable crane (20), wherein the transferrable crane (20) comprises:
- a revolving superstructure (21),
- a boom (4) mounted or to be mounted to the revolving superstructure (21), e.g. the boom (4) having a length of at least 80 meters, preferably of at least 100 meters, e.g. of at least 130 meters,
- a hoisting winch (37) and associated hoisting cable (35) departing from the boom (4) to lift and/or lower a wind turbine component, e.g. a wind turbine blade (114),
wherein the boom is provided with a tagline system for control of the wind turbine component during lifting and/or lowering,
wherein the method comprises - with the floating foundation (100) in floating condition - the steps of:
- arranging the transferable crane (20) on the floating foundation (100),
- using the transferable crane (20) arranged on the floating foundation (100) to lift and/or lower a wind turbine component, e.g. a wind turbine blade (114),
- removing the transferable crane (20) from the floating foundation (100),
wherein the floating foundation (100) comprises multiple buoyant stabilising columns (101), e.g. three or four buoyant stabilizing columns (101), e.g. with one of the stabilizing columns supporting the tower (111) of the wind turbine (110), and wherein the method comprises arranging the transferable crane (20) on one or two of the stabilizing columns (101),
which method comprises arranging the superstructure (21) of the transferable crane (20) on one of the buoyant stabilising columns (101), wherein the method comprises the use of a boom support (8), and wherein the method comprises temporarily arranging the boom support (8) on another one of the buoyant stabilising columns (101),
wherein the revolving superstructure (21) and the boom (4) are initially provided as separate crane parts and arranging of the transferrable crane (20) onto the floating foundation (100) comprises:
- arranging the revolving superstructure (21) on one stabilizing column (101) of the floating foundation (100),
- arranging the boom support (8) on another stabilizing column (101) of the floating foundation (100),
- arranging the boom (4) on the floating foundation (100) so that the boom support (8) carries at least part of the weight of the boom (4), e.g. the boom (4) being in transport configuration thereof,
- connecting, e.g. pivotally, the boom (4) to the revolving superstructure (21) to enable luffing of the boom.

2. Method according to claim 1, wherein the boom (4) of the transferable crane (20) has a transport configuration facilitating transport of the boom (4), and a working configuration for lifting and/or lowering a wind turbine component, e.g. the boom (4) in transport configuration being more compact, e.g. of reduced length, relative to the working configuration,
and wherein the step of arranging the transferable crane (20) on the floating foundation (100) is done with the boom (4) in the transport configuration,
and wherein the boom (4) is then brought into the working configuration for use in lifting and/or lowering the wind turbine component,
and wherein the boom (4) is returned to the transport configuration before removal of the transferable crane (20) from the floating foundation (100).

3. Method according to claim 1 or 2, wherein use is made of a vessel (1) provided with an installation crane (7), which installation crane (7) is used for lifting the transferable crane (20) when arranging the transferable crane (20) on the floating foundation (100) and when removing the transferable crane (20) from the floating foundation.

4. Method according to claim 3, wherein the vessel comprises a deck on which the transferable crane is transported to and from the offshore wind turbine, e.g. the revolving superstructure and the boom being transported to the offshore wind turbine as separate crane parts, and wherein the installation crane is used for transfer of the transferable crane between the deck and the floating foundation.

5. Method according to any one or more of the preceding claims, wherein the arranging of the transferable crane (20) on the floating foundation (100) comprises fastening the revolving superstructure (21) to the floating foundation (100), e.g. so as to transfer torque loads resulting from use of the crane to the floating structure.

6. Method according to any one or more of the preceding claims, wherein the crane (20) is part of a crane system, the system further comprising the boom support (8) and a crane support structure, and wherein arranging the transferable crane (20) to the floating foundation (100) comprises:
- arranging the crane support structure on the floating foundation (100),
- mounting the revolving superstructure (21) on the crane support structure already mounted to the floating foundation (100), preferably wherein the boom support (8) is part of the crane support structure.

7. Method according to any one or more of the preceding claims, wherein the method further comprises temporarily arranging a wind turbine blade support structure on the floating foundation (100), e.g. wherein one or more wind turbine blades (114) to be installed or removed are being placed in or on the wind turbine blade support structure, e.g. wherein the transferable crane (20) when arranged on the floating foundation (100) is used to arrange and remove the wind turbine blade support structure on and from the floating foundation (100), e.g. to transfer the wind turbine blade support structure between a vessel (1) and the floating foundation.

8. Method according to any one or more of the preceding claims, wherein the method further comprises ballasting the floating foundation (100) to, at least partially, compensate for the weight of the transferable crane (20) that is being arranged on the floating foundation.

9. Method according to any one or more of the preceding claims, wherein the crane (20) is used for installation and/or removal of a wind turbine blade (114) on or from the wind turbine (110), e.g. wherein the crane (20) is used to lift a wind turbine blade (114) to the height of a hub of the wind turbine (110) and to support the blade while fastening the blade to the hub.

10. Method according to at least claim 2, wherein the boom (4) is composed of multiple sections, e.g. two or more sections being telescopic and/or foldable relative to one another, e.g. a telescopic main boom section (25) that is or is to be pivotally mounted to the superstructure and a jib section (26) that is foldable relative to the main boom section (25) , e.g. between a folded position along the main boom section (25) and an extended position, wherein the method comprises - after arranging the boom (4) in compact transport configuration thereof on the floating foundation (100), e.g. after attaching the boom (4) to the superstructure (21) in the compact transport configuration, bringing the boom (4) in the working configuration involving extending any one or more telescopic sections and/or unfolding any one or more foldable sections.

11. Method according to any one or more of the preceding claims, e.g. at least claim 2, wherein the boom (4) is a telescopic and folding boom, the boom comprising:
- a main boom section (25), the main boom section comprising:
- a main boom structure (5) that is pivotally connected, or connectable, to the revolving superstructure (21), and
- an extensible boom structure (6), slidably mounted to the main boom structure (5), so as to be movable between a retracted position and an extended position in the direction of the length of the main boom section (25),
- a jib section (26) that is mounted pivotally about a pivot axis (P) to the extensible boom section, the jib section (26) comprising:
- a jib member(26a) that is pivotally mounted to the extensible boom structure (6), so as to be movable between a folded position, in which the jib member (26a) is alongside the main boom section (25), and an extended position, e.g. in the direction of the length of the main boom section, preferably wherein bringing the boom (4) from the transport configuration into the working configuration comprises raising the main boom section (25), with the jib member (26a) being in folded position, into a transformation position thereof, e.g. into a substantially vertical orientation, preferably the main boom resting against a boom stop (9) provided on the revolving superstructure (21), the raising of the main boom section (25) being followed, with the main boom section remaining in the transformation position thereof, by unfolding of the jib section (26) and the subsequent extension of the telescopic main boom section.

12. Method according to any one or more of the preceding claims, wherein the method comprises temporarily arranging a working deck accessible for personnel on at least one of the stabilising columns (101), e.g. the working deck bridging the stabilizing column (101) on which the superstructure (21) is arranged and the stabilizing column on which the boom support (8) is arranged, e.g. the boom support (8) being integrated with the working deck, e.g. the working deck being accessible via a motion compensated gangway device present on a vessel (1), e.g. the vessel (1) equipped with the installation crane (7) according to claim 4.

13. Method according to any one or more of the preceding claims, wherein the wind turbine (110) is a new wind turbine that has been initially construed with a tower (111) erected on a floating foundation (100), e.g. at a shoreline facility, and devoid of wind turbine blades (114), e.g. with a nacelle (112) mounted on the tower (111), and that has been towed to an offshore windfarm in said state, and wherein the wind turbine blades (114) are installed using the transferable crane (20) that is arranged on the floating foundation (100) when at the offshore windfarm.

14. Method according to any one or more of the preceding claims, wherein the revolving superstructure (21) is provided with a slew bearing that is supported by a crane support structure that is mounted to the revolving superstructure (21) or that is present on, or is to be temporarily mounted on, the floating foundation (100).

15. A crane system configured for use in a method according to any one or more of the preceding claims,
comprising a transferable crane (20) for lifting and/or lowering a wind turbine component (114) and a boom support (8), and optionally a crane support structure and/or a working deck,
wherein the transferable crane (20) has a revolving superstructure (21) and a boom (4) - initially provided as separate crane parts - that are to be connected, e.g. pivotally, to enable luffing of the boom (4), the boom (4) being provided with a tagline system for control of a wind turbine component during lifting and/or lowering thereof,
which transferable crane is configured to be removably arranged onto one or two buoyant stabilizing columns (101) of a floating foundation (100) in floating condition, the revolving superstructure (21) of the transferable crane (20) being configured to be arranged on one of the buoyant stabilizing columns (101) of the floating foundation in floating condition and the boom support being configured to be temporarily arranged on another stabilizing column (101) of the floating foundation (100) in floating condition,
wherein the boom (4) is configured to be arranged on the floating foundation (100) in floating condition so that the boom support (8) carries at least part of the weight of the boom (4), e.g. the boom (4) being in transport configuration thereof, e.g. the boom (4) also being supported by the revolving superstructure (21).

## Patentansprüche

1. Verfahren zur Montage und/oder Demontage einer Windkraftanlagenkomponente, wobei die Windkraftanlage (110) einen Turm (111) aufweist, der auf einer schwimmenden Plattform (100) errichtet ist, die sich in einem Schwimmzustand befindet, z. B. am Standort einer Offshore-Windfarm, wobei Folgendes zum Einsatz kommt:
- ein portabler Kran (20), wobei der portable Kran (20) Folgendes umfasst:
- einen sich drehenden Oberwagen (21),
- einen Ausleger (4), der an dem sich drehenden Oberwagen (21) montiert oder zu montieren ist, z. B. wobei der Ausleger (4) eine Länge von mindestens 80 Metern, vorzugsweise mindestens 100 Metern, z. B. mindestens 130 Metern, aufweist,
- eine Hubwinde (37) und zugehörige Hubseile (35), die vom Ausleger (4) abgehen, um eine Windkraftanlagenkomponente, z. B. ein Windkraftanlagenrotorblatt (114), anzuheben und/oder abzusenken,
wobei der Ausleger mit einem Einziehseilsystem zur Steuerung der Windkraftanlagenkomponente beim Anheben und/oder Absenken versehen ist,
wobei das Verfahren - mit der schwimmenden Plattform (100) im Schwimmzustand -folgende Schritte umfasst:
- Anordnen des portablen Krans (20) auf der schwimmenden Plattform (100),
- Verwenden des auf der schwimmenden Plattform (100) angeordneten portablen Krans (20) zum Anheben und/oder Absenken einer Windkraftanlagenkomponente, z. B. eines Windkraftanlagenrotorblatts (114),
- Entfernen des portablen Krans (20) von der schwimmenden Plattform (100),
wobei die schwimmende Plattform (100) mehrere schwimmende Stabilisierungssäulen (101) umfasst, z. B. drei oder vier schwimmende Stabilisierungssäulen (101), z. B. wobei eine Stabilisierungssäule den Turm (111) der Windkraftanlage (110) stützt, und wobei das Verfahren das Anordnen des portablen Krans (20) auf einer oder zwei der Stabilisierungssäulen (101) umfasst,
wobei das Verfahren das Anordnen des Oberwagens (21) des portablen Krans (20) auf einer der schwimmenden Stabilisierungssäulen (101) umfasst, wobei das Verfahren die Verwendung einer Auslegerstütze (8) umfasst und wobei das Verfahren das vorübergehende Anordnen der Auslegerstütze (8) auf einer anderen der schwimmenden Stabilisierungssäulen (101) umfasst,
wobei der sich drehende Oberwagen (21) und der Ausleger (4) zunächst als separate Kranteile vorgesehen sind und das Anordnen des portablen Krans (20) auf der schwimmenden Plattform (100) Folgendes umfasst:
- Anordnen des sich drehenden Oberwagens (21) auf einer Stabilisierungssäule (101) der schwimmenden Plattform (100),
- Anordnen der Auslegerstütze (8) auf einer anderen Stabilisierungssäule (101) der schwimmenden Plattform (100),
- Anordnen des Auslegers (4) auf der schwimmenden Plattform (100), sodass die Auslegerstütze (8) zumindest einen Teil des Gewichts des Auslegers (4) trägt, z. B. wobei sich der Ausleger (4) in dessen Transportkonfiguration befindet,
- Verbinden, z. B. schwenkbar, des Auslegers (4) mit dem sich drehenden Oberwagen (21), um das Wippen des Auslegers zu ermöglichen.

2. Verfahren nach Anspruch 1, wobei der Ausleger (4) des portablen Krans (20) eine Transportkonfiguration, die den Transport des Auslegers (4) ermöglicht, und eine Betriebskonfiguration zum Anheben und/oder Absenken der Windkraftanlagenkomponente, aufweist, z. B. wobei der Ausleger (4) in der Transportkonfiguration im Vergleich zur Betriebskonfiguration kompakter ist, z. B. eine verringerte Länge aufweist,
und wobei der Schritt des Anordnens des portablen Krans (20) auf der schwimmenden Plattform (100) mit dem Ausleger (4) in der Transportkonfiguration durchgeführt wird
und wobei der Ausleger (4) anschließend zum Anheben und/oder Absenken der Windkraftanlagekomponente in die Betriebskonfiguration gebracht wird und wobei der Ausleger (4) in die Transportkonfiguration zurückgebracht wird, bevor der portable Kran (20) von der schwimmenden Plattform (100) demontiert wird.

3. Verfahren nach Anspruch 1 oder 2, wobei ein Schiff (1) zu Einsatz kommt, das mit einem Montagekran (7) versehen ist, wobei der Montagekran (7) zum Anheben des portablen Krans (20) verwendet wird, wenn der portable Kran (20) auf der schwimmenden Plattform (100) angeordnet wird und wenn der portable Kran (20) von der schwimmenden Plattform entfernt wird.

4. Verfahren nach Anspruch 3, wobei das Schiff ein Deck umfasst, auf dem der portable Kran zu der und von der Offshore-Windkraftanlage transportiert wird, z. B. wobei der sich drehende Oberwagen und der Ausleger als separate Kranteile zur Offshore-Windkraftanlage transportiert werden, und wobei der Montagekran dazu verwendet wird, den portablen Kran zwischen dem Deck und der schwimmenden Plattform zu transportieren.

5. Verfahren nach einem oder mehreren der vorstehenden Ansprüche, wobei das Anordnen des portablen Krans (20) auf der schwimmenden Plattform (100) das Befestigen des sich drehenden Oberwagens (21) an der schwimmenden Plattform (100) umfasst, z. B. um sich aus der Verwendung des Krans auf der schwimmenden Plattform ergebende Drehmomentbelastungen zu übertragen.

6. Verfahren nach einem oder mehreren der vorstehenden Ansprüche, wobei der Kran (20) Teil eines Kransystems ist, wobei das System ferner die Auslegerstütze (8) und eine Kranstützstruktur umfasst und wobei das Anordnen des portablen Krans (20) an der schwimmenden Plattform (100) Folgendes umfasst:
- Anordnen der Kranstützstruktur auf der schwimmenden Plattform (100),
- montieren des sich drehenden Oberwagens (21) auf der bereits auf der schwimmenden Plattform (100) montierten Kranstützstruktur, vorzugsweise wobei die Auslegerstütze (8) Teil der Kranstützstruktur ist.

7. Verfahren nach einem oder mehreren der vorstehenden Ansprüche, wobei das Verfahren ferner das vorübergehende Anordnen einer Windkraftanlagenrotorblattstützstruktur auf der schwimmenden Plattform (100) umfasst, z. B. wobei ein oder mehrere zu montierende oder demontierende Windkraftanlagenrotorblätter (114) in oder auf der Windkraftanlagenrotorblattstützstruktur platziert werden, z. B. wobei der portable Kran (20), wenn er auf der schwimmenden Plattform (100) angeordnet ist, dazu verwendet wird, die Windkraftanlagenrotorblattstützstruktur auf der schwimmenden Plattform (100) anzuordnen und davon zu entfernen, z. B. um die Windkraftanlagenrotorblattstützstruktur zwischen einem Schiff (1) und der schwimmenden Plattform zu transportieren.

8. Verfahren nach einem oder mehreren der vorstehenden Ansprüche, wobei das Verfahren ferner das Beballasten der schwimmenden Plattform (100) umfasst, um das Gewicht des portablen Krans (20), der auf der schwimmenden Plattform angeordnet wird, zumindest teilweise auszugleichen.

9. Verfahren nach einem oder mehreren der vorstehenden Ansprüche, wobei der Kran (20) für die Montage und/oder Demontage eines Windkraftanlagenrotorblatts (114) an bzw. von der Windkraftanlage (110) verwendet wird, z. B. wobei der Kran (20) dazu verwendet wird, ein Windkraftanlagenrotorblatt (114) auf die Höhe einer Nabe der Windkraftanlage (110) anzuheben und das Rotorblatt während des Befestigens des Rotorblatts an der Nabe abzustützen.

10. Verfahren nach mindestens Anspruch 2, wobei der Ausleger (4) aus mehreren Abschnitten zusammengesetzt ist, z. B. zwei oder mehreren Abschnitten, die zueinander teleskopisch und/oder einklappbar sind, z. B. einem teleskopischen Hauptauslegerabschnitt (25), der an dem Oberwagen schwenkbar montiert oder zu montieren ist, und einem Auslegerarmabschnitt (26), der in Bezug zum Hauptauslegerabschnitt (25) einklappbar ist, z. B. zwischen einer eingeklappten Position entlang des Hauptauslegerabschnitts (25) und einer ausgeklappten Position, wobei das Verfahren nach dem Anordnen des Auslegers (4) in der kompakten Transportkonfiguration auf der schwimmenden Plattform (100), z. B. nach dem Anbringen des Auslegers (4) am Oberwagen (21) in der kompakten Transportkonfiguration, das Bringen des Auslegers (4) in die Betriebskonfiguration umfasst, in der ein oder mehrere teleskopische Abschnitte ausgefahren werden und/oder einer oder mehrere klappbare Abschnitte ausgeklappt werden.

11. Verfahren nach einem oder mehreren der vorstehenden Ansprüche, z. B. mindestens Anspruch 2, wobei der Ausleger (4) ein teleskopischer und klappbarer Ausleger ist, wobei der Ausleger Folgendes umfasst:
- einen Hauptauslegerabschnitt (25), wobei der Hauptauslegerabschnitt Folgendes umfasst:
- eine Hauptauslegerstruktur (5), die mit dem sich drehenden Oberwagen (21) schwenkbar verbunden oder verbindbar ist, und
- eine ausfahrbare Auslegerstruktur (6), die verschiebbar an der Hauptauslegerstruktur (5) montiert ist, um zwischen einer eingefahrenen Position und einer ausgefahrenen Position in Richtung der Länge des Hauptauslegerabschnitts (25) beweglich zu sein,
- einen Auslegerarmabschnitt (26), der um eine Schwenkachse (P) schwenkbar am ausfahrbaren Auslegerabschnitt montiert ist, wobei der Auslegerarmabschnitt (26) Folgendes umfasst:
- ein Auslegerarmelement (26a), das schwenkbar an der ausfahrbaren Auslegerstruktur (6) montiert ist, um zwischen einer eingeklappten Position, in der sich das Auslegerarmelement (26a) neben dem Hauptauslegerabschnitt (25) befindet, und einer ausgefahrenen Position, z. B. in Richtung der Länge des Hauptauslegerabschnitts, beweglich zu sein, vorzugsweise wobei das Bringen des Auslegers (4) von der Transportkonfiguration in die Betriebskonfiguration das Anheben des Hauptauslegerabschnitts (25), mit dem Auslegerarmelement (26a) in der zusammengeklappten Position, in eine Transformationsposition, z. B. in eine im Wesentlichen vertikale Orientierung, umfasst, wobei der Hauptausleger vorzugsweise an einem am sich drehenden Oberwagen (21) vorgesehenen Auslegeranschlag (9) anliegt, wobei das Anheben des Hauptauslegerabschnitts (25), mit dem Hauptauslegerabschnitt in dessen Transformationsposition verbleibend, gefolgt ist vom Ausklappen des Auslegerarmabschnitts (26) und dem anschließenden Ausfahren des teleskopischen Hauptauslegerabschnitts.

12. Verfahren nach einem oder mehreren der vorstehenden Ansprüche, wobei das Verfahren das vorübergehende Anordnen eines für Personal zugänglichen Arbeitsdecks zumindest auf einer der Stabilisierungssäulen (101) umfasst, z. B. wobei das Arbeitsdeck die Stabilisierungssäule (101), auf welcher der Oberwagen (21) angeordnet ist, und die Stabilisierungssäule, auf der die Auslegerstütze (8) angeordnet ist, mit einer Brücke verbindet, z. B. wobei die Auslegerstütze (8) in das Arbeitsdeck integriert ist, z. B. wobei das Arbeitsdeck über eine auf dem Schiff (1) vorhandene Gangwayvorrichtung mit Bewegungsausgleich zugänglich ist, z. B. wobei das Schiff (1) mit dem Montagekran (7) nach Anspruch 4 ausgestattet ist.

13. Verfahren nach einem oder mehreren der vorstehenden Ansprüche, wobei die Windkraftanlage (110) eine neue Windkraftanlage ist, die zunächst mit einem Turm (111) auf einer schwimmenden Plattform (100) errichtet wurde, z. B. an einer Küsteneinrichtung, und keine Windkraftanlagenrotorblätter (114) aufweist, z. B. eine am Turm (111) montierte Gondel (112) aufweist, und in diesem Zustand zu einer Offshore-Windfarm geschleppt wurde, und wobei die Windkraftanlagenrotorblätter (114) an der Offshore-Windfarm mittels des auf der schwimmenden Plattform (100) angeordneten portablen Krans (20) montiert werden.

14. Verfahren nach einem oder mehreren der vorstehenden Ansprüche, wobei der sich drehende Oberwagen (21) mit einem Momentenlager versehen ist, das von einer Kranstützstruktur getragen wird, die an dem sich drehenden Oberwagen (21) montiert ist, der auf der schwimmenden Plattform (100) vorhanden oder vorübergehend zu montieren ist.

15. Kransystem, das zur Verwendung in einem Verfahren nach einem oder mehreren der vorstehenden Ansprüche ausgelegt ist, umfassend einen portablen Kran (20) zum Anheben und/oder Absenken einer Windkraftanlagenkomponente (114) und einer Auslegerstütze (8), und optional eine Kranstützstruktur und/oder ein Arbeitsdeck,
wobei der portable Kran (20) einen sich drehenden Oberwagen (21) und einen Ausleger (4) aufweist, die zunächst als separate Kranteile vorgesehen sind, die miteinander zu verbinden sind, z. B. schwenkbar, um das Wippen des Auslegers (4) zu ermöglichen, wobei der Ausleger (4) mit einem Einziehseilsystem zur Steuerung der Windkraftanlagenkomponente beim Anheben und/oder Absenken versehen ist,
wobei der portable Kran dazu ausgelegt ist, demontierbar auf einer oder zwei schwimmenden Stabilisierungssäulen (101) einer schwimmenden Plattform (100) im Schwimmzustand angeordnet zu sein, wobei der sich drehende Oberwagen (21) des portablen Krans (20) dazu ausgelegt ist, auf einer der schwimmenden Stabilisierungssäulen (101) der schwimmenden Plattform im Schwimmzustand angeordnet zu sein, und die Auslegerstütze dazu ausgelegt ist, vorübergehend auf einer anderen Stabilisierungssäule (101) der schwimmenden Plattform (100) im Schwimmzustand angeordnet zu sein,
wobei der Ausleger (4) dazu ausgelegt ist, auf der schwimmenden Plattform (100) im Schwimmzustand angeordnet zu sein, sodass die Auslegerstütze (8) zumindest einen Teil des Gewichts des Auslegers (4) trägt, z. B. wobei sich der Ausleger (4) in seiner Transportkonfiguration befindet, z. B. wobei der Ausleger (4) außerdem von dem sich drehenden Oberwagen (21) getragen wird.

## Revendications

1. Procédé d'installation et/ou de retrait d'un composant d'éolienne, l'éolienne (110) comprenant une tour (111) qui est érigée sur une fondation flottante (100) qui est à l'état flottant, par exemple sur le site d'un parc éolien en mer, utilisant :
- une grue transférable (20), la grue transférable (20) comprenant :
- une superstructure tournante (21),
- une flèche (4) montée ou à monter sur la superstructure tournante (21), par exemple la flèche (4) ayant une longueur d'au moins 80 mètres, de préférence d'au moins 100 mètres, par exemple d'au moins 130 mètres,
- un treuil de levage (37) et un câble de levage (35) associé partant de la flèche (4) pour lever et/ou abaisser un composant d'éolienne, par exemple une pale d'éolienne (114),
la flèche étant pourvue d'un système de câble stabilisateur pour le contrôle du composant d'éolienne pendant le levage et/ou l'abaissement,
le procédé comprenant, la fondation flottante (100) étant à l'état flottant, les étapes consistant à :
- mettre en place la grue transférable (20) sur la fondation flottante (100),
- utiliser la grue transférable (20) mise en place sur la fondation flottante (100) pour lever et/ou abaisser un composant d'éolienne, par exemple une pale d'éolienne (114),
- retirer la grue transférable (20) de la fondation flottante (100),
la fondation flottante (100) comprenant de multiples colonnes de stabilisation flottantes (101), par exemple trois ou quatre colonnes de stabilisation flottantes (101), par exemple l'une des colonnes de stabilisation supportant la tour (111) de l'éolienne (110), et le procédé comprenant l'étape consistant à mettre en place la grue transférable (20) sur une ou deux des colonnes de stabilisation (101),
lequel procédé comprend l'étape consistant à mettre en place la superstructure (21) de la grue transférable (20) sur l'une des colonnes de stabilisation flottantes (101), le procédé comprenant l'étape consistant à utiliser un support de flèche (8), et le procédé comprenant l'étape consistant à mettre temporairement en place le support de flèche (8) sur une autre des colonnes de stabilisation flottantes (101),
la superstructure tournante (21) et la flèche (4) étant initialement fournies sous la forme de parties de grue séparées et la mise en place de la grue transférable (20) sur la fondation flottante (100) comprenant les étapes consistant à :
- mettre en place la superstructure tournante (21) sur une colonne de stabilisation (101) de la fondation flottante (100),
- mettre en place le support de flèche (8) sur une autre colonne de stabilisation (101) de la fondation flottante (100),
- mettre en place la flèche (4) sur la fondation flottante (100) de sorte que le support de flèche (8) supporte au moins une partie du poids de la flèche (4), par exemple la flèche (4) étant dans sa configuration de transport,
- relier, par exemple de manière pivotante, la flèche (4) à la superstructure tournante (21) pour permettre le relevage de la flèche.

2. Procédé selon la revendication 1, la flèche (4) de la grue transférable (20) ayant une configuration de transport permettant le transport de la flèche (4), et une configuration de travail pour lever et/ou abaisser un composant d'éolienne, par exemple la flèche (4) en configuration de transport étant plus compacte, par exemple de longueur réduite, par rapport à la configuration de travail,
et l'étape de mise en place de la grue transférable (20) sur la fondation flottante (100) étant effectuée avec la flèche (4) dans la configuration de transport,
et la flèche (4) étant ensuite amenée dans la configuration de travail pour être utilisée pour lever et/ou abaisser le composant d'éolienne,
et la flèche (4) étant ramenée à la configuration de transport avant le retrait de la grue transférable (20) de la fondation flottante (100).

3. Procédé selon la revendication 1 ou 2, utilisant un navire (1) pourvu d'une grue d'installation (7), laquelle grue d'installation (7) est utilisée pour lever la grue transférable (20) lors de la mise en place de la grue transférable (20) sur la fondation flottante (100) et lors du retrait de la grue transférable (20) de la fondation flottante.

4. Procédé selon la revendication 3, le navire comprenant un pont sur lequel la grue transférable est transportée vers et depuis l'éolienne en mer, par exemple la superstructure tournante et la flèche étant transportée vers l'éolienne en mer en tant que parties de grue séparées, et la grue d'installation étant utilisée pour transférer la grue transférable entre le pont et la fondation flottante.

5. Procédé selon l'une quelconque ou plusieurs des revendications précédentes, la mise en place de la grue transférable (20) sur la fondation flottante (100) comprenant l'étape consistant à fixer la superstructure tournante (21) à la fondation flottante (100), par exemple de sorte à transférer des charges de couple résultant de l'utilisation de la grue à la structure flottante.

6. Procédé selon l'une quelconque ou plusieurs des revendications précédentes, la grue (20) faisant partie d'un système de grue, le système comprenant en outre le support de flèche (8) et une structure de support de grue, et la mise en place de la grue transférable (20) sur la fondation flottante (100) comprenant les étapes consistant à :
- mettre en place la structure de support de grue sur la fondation flottante (100),
- monter la superstructure tournante (21) sur la structure de support de grue déjà montée sur la fondation flottante (100), de préférence le support de flèche (8) faisant partie de la structure de support de grue.

7. Procédé selon l'une quelconque ou plusieurs des revendications précédentes, le procédé comprenant en outre l'étape consistant à mettre temporairement en place une structure de support de pale d'éolienne sur la fondation flottante (100), par exemple une ou plusieurs pales d'éolienne (114) à installer ou à retirer étant placées dans ou sur la structure de support de pale d'éolienne, par exemple la grue transférable (20), lorsqu'elle est mise en place sur la fondation flottante (100), étant utilisée pour mettre en place et retirer la structure de support de pale d'éolienne sur et de la fondation flottante (100), par exemple pour transférer la structure de support de pale d'éolienne entre un navire (1) et la fondation flottante.

8. Procédé selon l'une quelconque ou plusieurs des revendications précédentes, le procédé comprenant en outre l'étape consistant à lester la fondation flottante (100) pour, au moins partiellement, compenser le poids de la grue transférable (20) qui est mise en place sur la fondation flottante.

9. Procédé selon l'une quelconque ou plusieurs des revendications précédentes, la grue (20) étant utilisée pour installer et/ou retirer une pale d'éolienne (114) sur ou de l'éolienne (110), par exemple la grue (20) étant utilisée pour lever une pale d'éolienne (114) à la hauteur d'un moyeu de l'éolienne (110) et pour supporter la pale tout en fixant la pale au moyeu.

10. Procédé selon au moins la revendication 2, la flèche (4) étant composée de plusieurs sections, par exemple au moins deux sections étant télescopiques et/ou repliables l'une par rapport à l'autre, par exemple une section de flèche principale télescopique (25) qui est ou doit être montée pivotante sur la superstructure et une section de volée variable (26) qui est repliable par rapport à la section de flèche principale (25), par exemple entre une position repliée le long de la section de flèche principale (25) et une position déployée, le procédé comprenant, après la mise en place de la flèche (4) dans sa configuration de transport compacte sur la fondation flottante (100), par exemple après la fixation de la flèche (4) sur la superstructure (21) dans la configuration de transport compacte, l'étape consistant à amener la flèche (4) dans la configuration de travail impliquant l'extension d'une ou de plusieurs sections télescopiques et/ou le déploiement d'une ou de plusieurs sections repliables.

11. Procédé selon l'une quelconque ou plusieurs des revendications précédentes, par exemple au moins la revendication 2, la flèche (4) étant une flèche télescopique et repliable, la flèche comprenant :
- une section de flèche principale (25), la section de flèche principale comprenant :
- une structure de flèche principale (5) qui est, ou peut être, reliée pivotante à la superstructure tournante (21), et
- une structure de flèche extensible (6), montée coulissante sur la structure de flèche principale (5), de sorte à être mobile entre une position rétractée et une position déployée dans le sens de la longueur de la section de flèche principale (25),
- une section de volée variable (26) qui est montée pivotante autour d'un axe de pivotement (P) sur la section de flèche extensible, la section de volée variable (26) comprenant :
- un élément de volée variable (26a) qui est monté pivotant sur la structure de flèche extensible (6), de sorte à être mobile entre une position repliée, dans laquelle l'élément de volée variable (26a) est le long de la section de flèche principale (25), et une position déployée, par exemple dans le sens de la longueur de la section de flèche principale, de préférence le passage de la flèche (4) de la configuration de transport à la configuration de travail comprenant le soulèvement de la section de flèche principale (25), l'élément de volée variable (26a) étant en position repliée, dans sa position de transformation, par exemple dans une orientation sensiblement verticale, de préférence la flèche principale reposant contre une butée de flèche (9) située sur la superstructure tournante (21), le soulèvement de la section de flèche principale (25) étant suivi, la section de flèche principale restant dans sa position de transformation, par le déploiement de la section de volée variable (26) et l'extension ultérieure de la section de flèche principale télescopique.

12. Procédé selon l'une quelconque ou plusieurs des revendications précédentes, le procédé comprenant l'étape consistant à mettre temporairement en place un pont de travail accessible au personnel sur au moins l'une des colonnes de stabilisation (101), par exemple le pont de travail reliant la colonne de stabilisation (101) sur laquelle la superstructure (21) est disposée et la colonne de stabilisation sur laquelle le support de flèche (8) est disposé, par exemple le support de flèche (8) étant intégré au pont de travail, par exemple, le pont de travail étant accessible par l'intermédiaire d'un dispositif de pont d'accès à compensation de mouvement présent sur un navire (1), par exemple le navire (1) équipé de la grue d'installation (7) selon la revendication 4.

13. Procédé selon l'une quelconque ou plusieurs des revendications précédentes, l'éolienne (110) étant une nouvelle éolienne qui a été initialement construite avec une tour (111) érigée sur une fondation flottante (100), par exemple dans une installation sur le rivage, et dépourvue de pales d'éolienne (114), par exemple avec une nacelle (112) montée sur la tour (111), et qui a été remorquée vers un parc éolien en mer dans ledit état, et les pales (114) de l'éolienne étant installées au moyen de la grue transférable (20) qui est mise en place sur la fondation flottante (100) lorsqu'elle se trouve dans le parc éolien en mer.

14. Procédé selon l'une quelconque ou plusieurs des revendications précédentes, la superstructure tournante (21) étant pourvue d'un palier de rotation qui est supporté par une structure de support de grue qui est montée sur la superstructure tournante (21) ou qui est présente sur, ou doit être montée temporairement sur, la fondation flottante (100).

15. Système de grue conçu pour être utilisé dans un procédé selon l'une quelconque ou plusieurs des revendications précédentes, comprenant une grue transférable (20) pour lever et/ou abaisser un composant d'éolienne (114) et un support de flèche (8), et éventuellement une structure de support de grue et/ou un pont de travail,
la grue transférable (20) comprenant une superstructure tournante (21) et une flèche (4), initialement fournie sous la forme de parties de grue séparées, qui doivent être reliées, par exemple de manière pivotante, pour permettre le relevage de la flèche (4), la flèche (4) étant pourvue d'un système de câble stabilisateur pour le contrôle d'un composant d'éolienne pendant son levage et/ou son abaissement,
laquelle grue transférable est conçue pour être mise en place de manière amovible sur une ou deux colonnes de stabilisation flottantes (101) d'une fondation flottante (100) à l'état flottant, la superstructure tournante (21) de la grue transférable (20) étant conçue pour être mise en place sur l'une des colonnes de stabilisation flottantes (101) de la fondation flottante à l'état flottant et le support de flèche étant conçu pour être mis temporairement en place sur une autre colonne de stabilisation (101) de la fondation flottante (100) à l'état flottant,
la flèche (4) étant conçue pour être mise en place sur la fondation flottante (100) à l'état flottant de sorte que le support de flèche (8) supporte au moins une partie du poids de la flèche (4), par exemple la flèche (4) étant dans sa configuration de transport, par exemple la flèche (4) étant également supportée par la superstructure tournante (21).
